# FASCICULE DE BREVET EUROPEEN

(11) **EP 3 383 667 B1**
(45) Date de publication et mention de la délivrance du brevet: **20.11.2019**
(21) Numéro de dépôt: 16813010.2
(22) Date de dépôt: 24.11.2016
(51) Int. Cl.: B60C 9/20

(54) **ARMATURE DE SOMMET DE PNEUMATIQUE POUR VÉHICULE LOURD DE TYPE GÉNIE CIVIL**
GÜRTELVERSTÄRKUNG FÜR EINEN REIFEN FÜR EIN SCHWERLASTFAHRZEUG IM BAUWESEN
CROWN REINFORCEMENT FOR A TYRE FOR A HEAVY-GOODS VEHICLE USED IN CIVIL ENGINEERING

(30) Priorité: 04.12.2015 FR 1561856
(43) Date de publication de la demande: 10.10.2018
(73) Titulaire: Compagnie Générale des Etablissements Michelin, 63000 Clermont-Ferrand (FR)
(72) Inventeur: CLEMENT, Emmanuel, 63040 Clermont-Ferrand Cedex 9 (FR); DOMINGO, Alain, 63040 Clermont-Ferrand Cedex 9 (FR); LE CHENADEC, Elodie, 63040 Clermont-Ferrand Cedex 9 (FR)
(74) Mandataire: Millanvois, Patrick Jacques Jean
(86) Numéro de dépôt international: PCT/FR2016/053066
(87) Numéro de publication internationale: WO 2017/093637

(56) Documents cités:
- WO-A1-2009/033977
- US-A1- 2006 169 383
- US-A1- 2015 251 497

## Description

La présente invention concerne un pneumatique pour véhicule lourd de type génie civil et plus particulièrement, le sommet d'un tel pneumatique.

Bien que non limitée à ce type d'application, l'invention est plus particulièrement décrite en référence à un pneumatique radial de grande dimension, destiné, par exemple, à être monté sur un dumper, véhicule de transport de matériaux extraits de carrières ou de mines de surface. Le diamètre nominal de la jante d'un tel pneumatique, au sens de la norme European Tyre and Rim Technical Organisation ou ETRTO, est au moins égal à 25 pouces.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien. Le plan perpendiculaire à l'axe de rotation du pneumatique et passant par son centre de gravité est nommé plan équatorial.

Dans ce qui suit, les expressions « radialement intérieur à» et « radialement extérieur à» signifient respectivement « plus proche de l'axe de rotation du pneumatique, selon la direction radiale, que » et « plus éloigné de l'axe de rotation du pneumatique, selon la direction radiale, que ». Les expressions « axialement intérieur à» et « axialement extérieur à» signifient respectivement « plus proche du plan équatorial, selon la direction axiale, que » et « plus éloigné du plan équatorial, selon la direction axiale, que ». Une « distance radiale » est une distance par rapport à l'axe de rotation du pneumatique, et une « distance axiale » est une distance par rapport au plan équatorial du pneumatique. Une « épaisseur radiale » est mesurée selon la direction radiale, une « largeur axiale » est mesurée selon la direction axiale, une « longueur circonférentielle » est une longueur d'arc de cercle suivant la direction circonférentielle.

Un pneumatique comprend un sommet comprenant une bande de roulement destinée à venir en contact avec le sol par l'intermédiaire d'une surface de roulement, deux bourrelets destinés à venir en contact avec une jante et deux flancs reliant le sommet aux bourrelets. Un pneumatique radial, tel que généralement utilisé pour un véhicule de génie civil, comprend plus particulièrement une armature de carcasse radiale et une armature de sommet, telles que décrites, par exemple, dans le document WO2014-095957.

L'armature de carcasse d'un pneumatique radial pour véhicule lourd de type génie civil comprend habituellement au moins une couche de carcasse comprenant des renforts généralement métalliques enrobés d'un matériau élastomérique appelé mélange d'enrobage. La couche de carcasse comprend une partie principale, reliant les deux bourrelets entre eux et s'enroulant, dans chaque bourrelet, de l'intérieur vers l'extérieur du pneumatique autour d'un élément de renforcement circonférentiel généralement métallique appelé tringle, pour former un retournement. Les renforts métalliques d'une couche de carcasse sont sensiblement parallèles entre eux et font, avec la direction circonférentielle, un angle compris entre 85° et 95°.

L'armature de sommet d'un pneumatique radial pour véhicule lourd de type génie civil comprend une superposition de couches de sommet disposées circonférentiellement, radialement à l'extérieur de l'armature de carcasse. Chaque couche de sommet comprend des renforts généralement métalliques, parallèles entre eux et enrobés d'un matériau élastomérique ou mélange d'enrobage.

L'armature de sommet comprend au moins une armature de travail comprenant au moins deux couches de travail, radialement extérieures à l'armature de carcasse et radialement intérieures à la bande de roulement. Ces couches de travail sont superposées et formées de renforts ou câbles parallèles dans chaque couche et croisés d'une couche à la suivante en faisant avec la direction circonférentielle des angles compris entre 10° et 45°. Leurs largeurs axiales respectives sont au moins égales aux deux tiers de la largeur axiale maximale du pneumatique. La largeur axiale maximale du pneumatique est mesurée au niveau des flancs, le pneumatique étant monté sur sa jante et faiblement gonflé, c'est-à-dire gonflé à une pression égale à 10% de la pression nominale telle que recommandée, par exemple, par la Tire and Rim Association ou TRA. L'armature de travail, comprenant au moins deux couches de travail, a pour fonction de ceinturer le pneumatique et de donner de la rigidité et de la tenue de route au pneumatique. L'armature de travail reprend à la fois des sollicitations mécaniques de gonflage, générées par la pression de gonflage du pneumatique et transmises par l'armature de carcasse, et des sollicitations mécaniques de roulage, générées par le roulage du pneumatique sur un sol et transmises par la bande roulement. Elle doit en outre résister à l'oxydation, aux chocs et aux perforations.

Les dites couches de travail, formant l'armature de travail, peuvent être radialement intérieures à une armature de protection comprenant au moins une couche dite de protection et formée de renforts généralement métalliques et extensibles ou élastiques. Dans le cas d'un pneumatique pour un véhicule lourd de type génie civil destiné à rouler sur des sols accidentés, la présence d'une armature de protection comprenant au moins une couche de protection est avantageuse. Elle protège essentiellement les couches de travail des agressions mécaniques ou physico-chimiques, susceptibles de se propager à travers la bande de roulement radialement vers l'intérieur du pneumatique. Dans le cas de couches de protection multiples, il est avantageux que les renforts soient croisés d'une couche à la suivante et que les renforts de la couche de protection la plus radialement intérieure soient croisés avec les renforts inextensibles de la couche de travail la plus radialement extérieure et adjacente à ladite couche de protection la plus radialement intérieure.

L'armature de sommet peut également comprendre une couche de renforts métalliques inélastiques faisant avec la direction circonférentielle un angle compris entre 45° et 90°. Cette couche, dite de triangulation, est radialement extérieure à l'armature de carcasse et radialement intérieure à la couche de travail radialement la plus intérieure, comprenant des renforts parallèles entre eux et formant, avec la direction circonférentielle, un angle au moins égal à 45° en valeur absolue. La couche de triangulation forme avec au moins ladite couche de travail une armature triangulée, et a pour rôle essentiel de reprendre les efforts de compression transversale auxquels sont soumis les renforts dans la zone du sommet du pneumatique. Ce type d'architecture de sommet comprenant des couches de triangulation, de travail et de protection, implique un sommet souple subissant au gonflage une déformation importante au niveau du plan équatorial et aux épaules, c'est-à-dire aux extrémités axiales de la bande de roulement. La souplesse au niveau du plan équatorial permet au sommet de se déformer sans défaillance lorsque le véhicule roule sur un obstacle dont la taille est, par exemple, de l'ordre de grandeur de la flèche du pneumatique sous sa charge nominale. Par flèche, on entend la variation de rayon au niveau du point milieu de la surface de roulement, dans le plan équatorial, lorsque le pneumatique passe d'un état gonflé non chargé à un état gonflé chargé sous sa charge nominale.

En revanche, avec cette susdite architecture de sommet, lors du roulage, cette même souplesse à l'épaule a pour conséquence un taux de déformation important des matériaux élastomériques présents dans le sommet, générant une température élevée desdits matériaux élastomériques. Aux températures atteintes, les matériaux élastomériques du sommet perdent une partie de leur résistance à la fissuration, rendant le sommet moins endurant. Cette fissuration des matériaux élastomériques peut dans les cas extrêmes amener à la séparation des couches de travail, appelée clivage du sommet.

Le troisième paramètre de la performance du sommet est lié à la résistance des couches de protection à la rupture en traction et à la rupture en cisaillement qui peuvent avoir lieu pendant des chocs avec les objets rigides.

Pour résoudre le problème de l'endurance sommet, il est connu, selon le document FR 2419182, que les pneumatiques pour véhicule lourd de type génie civil peuvent comprendre une ou plusieurs couches étroites de renforcement radialement extérieures à l'armature de carcasse et radialement intérieures à l'armature de travail, centrées autour de du plan équatorial. Ces couches sont dites couches étroites de frettage et ont pour fonction de limiter la déformation radiale du pneumatique au gonflage. Cette limitation permet la diminution de la déformation du sommet lors de la mise à plat sous l'effet de la charge et ainsi la diminution de la température permettant une amélioration de la performance d'endurance au clivage du sommet. Par couches étroites de frettage, on entend des couches dont la largeur axiale est inférieure à 0,6 fois la largeur axiale de la couche de travail la plus radialement intérieure. Ces couches étroites de frettage comprennent des renforts inextensibles généralement métalliques qui forment avec la direction circonférentielle des angles supérieurs à 6° et inférieurs à 12°. Les renforts respectifs de ces couches étroites de frettage sont croisés d'une couche à la suivante pour assurer une plus grande rigidité au sommet et une meilleure résistance en endurance au clivage du sommet.

Néanmoins cette solution présente trois inconvénients. Le premier inconvénient concerne la fabrication des couches étroites de frettage et leur pose pour les pneumatiques pour véhicule lourd de type génie civil de grande dimension. En effet, pour des pneumatiques de plus de 3 m de diamètre et 0,8 m de largeur, fabriquer une couche étroite de frettage dont les renforts forment avec la direction circonférentielle un angle de l'ordre de 8°, suppose de découper des couches étroite de frettage sur une longueur de coupe de plus de 2,5 m, soit hors gabarit des machines industrielles du commerce et de réaliser la soudure de la couche étroite de frettage sur le pneumatique avant cuisson sur cette même longueur, ce qui demande un savoir-faire et une précision de près du double de celui de la pose des couches de travail ou de protection.

Le deuxième inconvénient est une sensibilité du pneumatique aux chocs liés à la présence d'obstacles sur les pistes d'une hauteur de l'ordre de grandeur de la flèche du pneumatique sous sa charge nominale. En effet, en cas de choc, ces couches étroites de frettage très rigides et éloignées de la fibre neutre du sommet subissent une importante déformation imposée qui entraine l'endommagement ou la rupture de l'armature de sommet engendrant la défaillance du pneumatique. Il n'est pas possible de rapprocher ce type de couche de frettage de la fibre neutre en raison de la nécessité d'être en mesure, a minima, de déformer le pneumatique lors de sa mise en presse. Ceci permet en effet de générer les éléments de sculpture de la bande de roulement du pneumatique par pression du pneumatique dans le moule. Il n'est pas non plus possible d'ouvrir davantage les angles pour assouplir le sommet au risque de perdre le bénéfice en endurance au clivage du sommet, consécutive à la rigidification du sommet.

Le troisième inconvénient est lié à la trop faible résistance de couches de protection à la rupture. Pour ne pas diminuer la performance du sommet en clivage, il n'est pas possible d'augmenter le diamètre des renforts des couches de protection et donc leur résistance. En effet des renforts plus résistants ont de plus gros diamètre et occupent un plus gros volume et donc conduisent à une augmentation de la température de fonctionnement et à une baisse de la performance en clivage.

Pour résoudre ce problème de sensibilité aux chocs des sommets comprenant des couches étroites de frettage, les documents WO 2014048897 et WO 2014095957 proposent l'utilisation soit de couches étroites de frettage élastiques, soit de couches étroites de frettage non élastiques associées avec une première couche de travail dont l'angle des renforts est au moins égal à 50°. Mais ces solutions, même si elles améliorent la résistance aux chocs du sommet, ne garantissent pas sa tenue mécanique en toutes circonstances, compte tenu des dimensions de certains obstacles rencontrés sur les lieux d'utilisation des pneumatiques et par les caractéristiques des couches de protection.

Le but de l'invention est d'améliorer à la fois les performances d'endurance au clivage et de résistance aux chocs du sommet d'un pneumatique pour véhicule lourd de type génie civil.

Ce but est atteint selon l'invention par un pneumatique pour véhicule lourd de génie civil comprenant :
- une bande de roulement destinée à entrer en contact avec un sol,
- une armature de carcasse radiale radialement intérieure à la bande de roulement et comprenant au moins une couche de carcasse,
- une armature de sommet, radialement intérieure à la bande de roulement et radialement extérieure à l'armature de carcasse radiale, et comprenant une armature de travail, une armature de frettage et une armature de protection,
- l'armature de travail comprenant au moins deux couches de travail, chacune comprenant des renforts métalliques inélastiques croisés d'une couche de travail à la suivante et faisant, avec la direction circonférentielle des angles au moins égaux à 30° et au plus égaux à 35°,
- l'armature de frettage étant formée par un enroulement circonférentiel d'une nappe comprenant des renforts métalliques élastiques circonférentiels faisant, avec la direction circonférentielle des angles au plus égaux à 2.5°, ledit enroulement circonférentiel de la nappe s'étendant depuis une première extrémité circonférentielle jusqu'à une deuxième extrémité circonférentielle radialement extérieure à la première extrémité circonférentielle, de façon à former un empilement radial d'au moins deux couches de frettage ,
- l'armature de protection comprenant au moins deux couches de protection composées de renforts métalliques croisés d'une couche de protection à la suivante et faisant, avec la direction circonférentielle des angles au moins égaux à 20° et au plus égaux à 40°,
- les renforts métalliques des couches de protection étant élastiques, ayant un diamètre au moins égal à 3 mm, et une force à rupture au moins égale à 800 daN,
- les renforts métalliques des couches de travail ayant une force à rupture au moins égale à 2500 daN,
- l'armature de frettage étant radialement positionnée entre les couches de travail
- les renforts métalliques circonférentiels de l'armature de frettage ayant une force à rupture au moins égale à 800 daN.

En effet, une telle architecture permet, grâce à l'utilisation de renforts circonférentiels, situés près de la fibre neutre du sommet, de limiter la déformation du sommet aux épaules à un niveau proche d'une déformation du sommet aux épaules obtenue dans le cas d'une architecture selon l'état de l'art, comprenant des couches étroites de frettage. Ceci permet donc d'obtenir à la fois la performance d'endurance au clivage du sommet attendue et la performance de résistance aux chocs visée grâce à un sommet souple au centre apte à supporter la déformation due aux chocs lorsque le véhicule roule sur des obstacles.

En effet, lors du franchissement d'un obstacle, le sommet du pneumatique fonctionne comme une poutre dont la fibre neutre se situe entre les couches de travail selon un mode de déformation imposée. La fibre neutre en flexion de l'armature de sommet se situe entre les couches de sommet les plus rigides, à savoir entre les couches de travail inélastiques. En positionnant les renforts circonférentiels entre ces dites couches de travail, la solution minimise les contraintes et les déformations de flexion associées à cette sollicitation que doivent supporter les renforts circonférentiels.

L'utilisation des renforts de frettage permet en outre d'augmenter les angles de couches de travail et ainsi de baisser la température, et/ou d'utiliser pour les couches de protection, des renforts de plus grand diamètre et donc de plus grande résistance à la rupture.

Selon l'invention, l'armature de frettage est formée par un enroulement circonférentiel d'une nappe. L'enroulement circonférentiel d'une nappe est avantageux par rapport à l'enroulement circonférentiel d'un renfort ou d'une bande constituée de plusieurs renforts, par exemple de 10 renforts, ce type d'enroulement étant classiquement utilisée pour des pneumatiques pour des véhicules de tourisme ou des véhicules poids lourds. Cette solution classique d'enroulement présenterait un coût prohibitif en raison de la dimension des pneumatiques pour véhicule lourd de type génie civil. En effet le périmètre ainsi que la largeur de pose, et la masse du pneumatique implique, lors de la pose de ces renforts circonférentiels, une vitesse de rotation du pneumatique beaucoup plus faible pour éviter une déformation du pneumatique cru, c'est-à-dire avant cuissson, sous l'effet de la force centrifuge. Cette solution déboucherait par conséquent sur un temps d'opération prohibitif. Par ailleurs une telle solution rigidifierait le sommet de manière excessive ne résolvant pas le problème de l'endurance aux chocs.

En ce qui concerne les renforts métalliques, un renfort métallique est caractérisé mécaniquement par une courbe représentant la force de traction (en N), appliquée au renfort métallique, en fonction de l'allongement relatif (en %) du renfort métallique, dite courbe force-allongement. De cette courbe force-allongement sont déduites des caractéristiques mécaniques en traction, telles que l'allongement structural Aₛ (en %), l'allongement total à la rupture Aₜ (en %), la force à la rupture Fₘ (charge maximale en N) et la résistance à la rupture Rₘ (en MPa), ces caractéristiques étant mesurées selon la norme ISO 6892 de 1984.

L'allongement total à la rupture Aₜ du renfort métallique est, par définition, la somme de ses allongements structural, élastique et plastique (Aₜ = Aₛ + Aₑ + Aₚ). L'allongement structural Aₛ résulte du positionnement relatif des fils métalliques constitutifs du renfort métallique sous un faible effort de traction. L'allongement élastique Aₑ résulte de l'élasticité même du métal des fils métalliques, constituant le renfort métallique, pris individuellement (loi de Hooke). L'allongement plastique Aₚ résulte de la plasticité (déformation irréversible au-delà de la limite d'élasticité) du métal de ces fils métalliques pris individuellement. Ces différents allongements ainsi que leurs significations respectives, bien connus de l'homme du métier, sont décrits, par exemple, dans les documents US 5843583, WO 2005014925 et WO2007090603.

On définit également, en tout point de la courbe force-allongement, un module en extension (en GPa) qui représente la pente de la droite tangente à la courbe force-allongement en ce point. En particulier, on appelle module élastique en extension ou module d'Young, le module en extension de la partie linéaire élastique de la courbe force-allongement.

Parmi les renforts métalliques, on distingue usuellement les renforts métalliques élastiques, tels que ceux généralement utilisés dans les couches de protection, et les renforts métalliques inélastiques, tels que ceux généralement utilisés dans les couches de travail.

Un renfort métallique élastique est caractérisé par un allongement structural Aₛ au moins égal à 1% et un allongement total à rupture Aₜ au moins égal à 4%. En outre, un renfort métallique élastique a un module élastique en extension compris usuellement entre 40 GPa et 150 GPa.

Un renfort métallique inélastique ou inélastique est caractérisé par un allongement relatif, sous une force de traction égale 10% de la force à rupture Fₘ, au plus égal à 0.2%. Par ailleurs, un renfort métallique non élastique généralement a un module élastique en extension compris usuellement entre 150 GPa et 200 GPa.

Les renforts métalliques élastiques des couches de protection permettent de supporter les déformations locales imposées lors du roulage sur des obstacles. Selon l'invention, ils ont un diamètre au moins égal à 3 mm et une force à rupture au moins égale à 800 daN. La valeur élevée du diamètre permet d'absorber les déformations de cisaillement de la couche de protection sur une plus grande épaisseur ce qui génère des contraintes de cisaillement plus faibles. La valeur élevée de la force à rupture permet au renfort de supporter des contraintes de rupture plus élevées améliorant ainsi la performance du sommet en endurance aux chocs.

Les renforts métalliques des couches de travail ont une force à rupture au moins égale à 2500 daN, ce qui garantit un coefficient de sécurité à la rupture et une tenue à la fatigue satisfaisant. De préférence les renforts de l'ensemble de l'armature sommet et en particulier des couches de protection sont pénétrés par du mélange caoutchouteux. Ceci peut être effectué à tout moment de la fabrication du pneumatique comme par exemple lors de la fabrication du renfort, lors de la pose du renfort sur le pneumatique avant cuisson, soit lors du moulage du pneumatique. Cette propriété améliore la résistance à la corrosion des renforts des couches de travail et de l'ensemble du sommet en empêchant la propagation dans le renfort des éléments corrodants, ainsi que la résistance à la fatigue des renforts en évitant le frottement des composants des renforts les uns sur les autres.

Les renforts circonférentiels de l'armature de frettage sont des renforts qui font, avec la direction circonférentielle, des angles compris dans l'intervalle [-2,5°, +2,5°]. Ils sont élastiques afin de permettre l'expansion de diamètre de pose qu'implique la cuisson des pneumatiques dans un moule. En effet un pneumatique est généralement obtenu par la pose des différents éléments qui le constituent à des diamètres spécifiques initiaux. Le pneumatique est ensuite disposé dans un moule de cuisson d'un diamètre supérieur au diamètre maximal du pneumatique avant cuisson, dans lequel les matériaux élastomériques sont vulcanisés par effet thermique. Pour ce faire le pneumatique est mis sous pression dans le moule et l'ensemble des éléments qui le constituent prennent un diamètre supérieur à leur diamètre spécifique initial. Pour l'ensemble des couches de travail, des couches de carcasse, des couches de protection dont les renforts sont non circonférentiels, ce changement de diamètre se fait par déformation du mélange d'enrobage des différents renforts. Pour les couches de renforts circonférentiels de l'armature de frettage, cette extension circonférentielle est permise par les renforts qui sont élastiques avec un allongement structural au moins égal à l'extension due au moulage.

En outre, les renforts circonférentiels de l'armature de frettage ont une force à rupture au moins égale à 800 daN, pour pouvoir résister aux efforts de traction induits par le passage sur les obstacles rencontrés par le pneumatique en utilisation.

Une solution préférée est que les renforts métalliques circonférentiels de l'armature de frettage et des couches de protection soient de même nature. Par nature de renforts, on entend que leurs constituants, leurs modes de fabrication, leurs géométries soient identiques. En effet la standardisation des constituants du pneumatique est un moyen pour baisser les coûts de fabrication.

Avantageusement les renforts métalliques circonférentiels de l'armature de frettage ou des couches de protection ont un module d'élasticité à 10% d'allongement au moins égal à 70 GPa et au plus égal à 130 GPa afin de supporter les déformations imposées lors du franchissement d'obstacles pour l'usage en génie civil.

Préférentiellement les renforts métalliques des couches de protection font avec la direction circonférentielle des angles dont la valeur absolue est sensiblement égale à l'angle des renforts métalliques des couches de travail avec la direction circonférentielle. Par « sensiblement égale », on entend égale à la dispersion de fabrication près, soit une différence d'angle en valeur absolue inférieure à 2°. Ces angles sont mesurés au niveau du plan équatorial sur un pneumatique dont on a retiré la bande de roulement et les nappes radialement extérieures à celle dont on veut mesurer l'angle. En l'occurrence l'angle choisi est un optimum pour maîtriser la température au sommet à l'extrémité axialement extérieure des couches de travail et des couches de protection et donc la performance en clivage sommet, tout en ayant une rigidité du sommet permettant une bonne résistance au choc du sommet.

Il est avantageux que les extrémités circonférentielles de la nappe constituant l'armature de frettage fassent, avec la direction axiale, des angles (A) au moins égaux à 25°. Un tel angle permet d'éviter d'avoir les extrémités circonférentielles de l'armature de frettage contenues dans un plan méridien et donc de désensibiliser les matériaux élastomériques environnants à la fissuration. En effet chaque extrémité circonférentielle de renfort de l'armature de frettage étant une zone potentielle de fissuration des matériaux élastomériques environnants, ces zones potentielles de fissuration ne doivent pas être concentrées dans un même plan méridien afin d'éviter la jonction de microfissures pouvant entraîner une fissuration dommageable à l'endurance du pneumatique. Par ailleurs, en cas de choc, la contrainte est maximale dans le plan méridien correspondant à la flèche maximale. Cet angle permet ainsi d'éviter que toutes les extrémités des renforts et les matériaux élastomériques les entourant subissent un maximum de contraintes et de déformations dans le même plan méridien. Pour avoir un seul réglage de coupe de l'armature de frettage en fabrication, les angles de chacune des extrémités circonférentielles de la nappe constituant l'armature de frettage avec la direction axiale sont égaux et de même signe.

Préférentiellement la distance circonférentielle entre les première et deuxième extrémités circonférentielles de l'armature de frettage est au moins égale à 0.6 m et au plus égale à 1.2 m. En effet, les première et deuxième extrémités circonférentielles de l'armature de frettage ne sont pas contenues dans un même plan méridien et se recouvrent sur une portion circonférentielle de la périphérie du pneumatique, pour garantir la présence de l'armature de frettage sur toute la périphérie du pneumatiques. La distance circonférentielle entre les deux extrémités circonférentielles de l'armature de frettage est nommée longueur de recouvrement. Par longueur de recouvrement, on entend la distance circonférentielle minimale entre les extrémités circonférentielles de l'armature de frettage, mesurée dans le plan équatorial, plan circonférentiel passant par le milieu de la bande de roulement. Le fait que la longueur de recouvrement soit supérieure à 0,6 m permet, premièrement d'éviter qu'aucune zone du pneumatique, sous l'effet du changement de diamètre lors de la cuisson, ait une couche de renforts circonférentiels de moins entre les couches de travail que le nombre de couches nécessaire à l'usage, et deuxièmement, que, chaque extrémité d'un renfort étant une zone potentielle de fissuration des matériaux élastomériques environnants, ces zones potentielles de fissuration ne soient pas concentrées dans le même plan méridien, même à des rayons différents. Le fait que cette longueur soit limitée à 1,2 m a pour conséquence de ne pas augmenter le coût en matière première de la solution, sans apporter de gain en endurance.

Préférentiellement la surface moyenne de la nappe constituant l'armature de frettage, au voisinage de la première extrémité circonférentielle de l'armature de frettage, fait, avec la direction circonférentielle, un angle, mesuré dans le plan équatorial, au plus égal à 45°. Pour ce faire une solution consiste à disposer le long de cette extrémité de l'armature de frettage, une bande transversale de matériaux élastomériques de section triangulaire. Cette solution a pour effet de diminuer les contraintes de flexion dans les renforts de l'armature de frettage au voisinage de la première extrémité de l'armature de frettage, la plus radialement intérieure. En effet à cette extrémité, la surface moyenne de l'enroulement de l'armature de frettage subit une variation de diamètre égale au diamètre des renforts de l'armature de frettage. Cette variation de diamètre se fait par une flexion du câble qu'il convient de limiter pour préserver l'endurance du sommet. Par ailleurs, cette solution consistant en la pose d'une bande transversale en matériaux élastomériques de section triangulaire remplit une cavité qui sinon se remplit d'air avant la cuisson du pneumatique pouvant générer des trous dans les matériaux élastomériques après cuisson, diminuant l'endurance du pneumatique.

Pour des raisons similaires, la surface moyenne de la couche de travail, au voisinage de la deuxième extrémité circonférentielle de l'armature de frettage, fait, avec la direction circonférentielle, un angle, mesuré dans le plan équatorial, au plus égal à 45°. A cette extrémité de l'armature de frettage, la couche de travail subit une variation de diamètre égale au diamètre des renforts de l'armature de frettage, impliquant une flexion de la couche de travail. Une solution est de disposer aussi le long de cette extrémité d'une bande transversale en matériaux élastomériques de section triangulaire pour obtenir les mêmes effets techniques décrits précédemment, à savoir la diminution des contraintes de flexion dans les renforts de la couche de travail et l'impossibilité de piéger de l'air à cet endroit avant la cuisson du pneumatique.

La solution préférée est telle que largeur axiale de l'armature de frettage est inférieure à la moitié de la largeur axiale du pneumatique, car, au-delà de cette largeur maximale, le cycle des contraintes au tour de roue dans les renforts de l'armature de frettage entraîne une fatigue importante des renforts et une perte d'endurance.

Préférentiellement, les deux couches de travail sont couplées, selon la direction axiale, sur une portion de couplage ayant une largeur axiale au moins égale à 1,5% de la largeur axiale du pneumatique. En effet le couplage axial des couches de travail, axialement à l'extérieur des extrémités axiales des renforts de l'armature de frettage, permet localement une augmentation de la rigidité du sommet et donc une baisse des déformations, d'où une baisse de la température et une amélioration de l'endurance au clivage du sommet.

Il est également préférable que les deux couches de travail soient couplées, selon la direction axiale, sur une portion de couplage ayant une largeur axiale au plus égale à 5% de la largeur axiale du pneumatique. Au-delà d'une certaine longueur de couplage, les couches de travail doivent être de nouveau découplées pour diminuer les cisaillements des matériaux élastomériques au voisinage des extrémités axiales des couches de travail.

On dit que deux couches de renforts, telles que des couches de travail par exemple, sont couplées à l'ordonnée axiale considérée si la distance radiale entre les centres géométriques de deux renforts adjacents de ces deux couches est inférieure à 3 fois le rayon moyen des renforts considérés. Si cette même distance est supérieure à 4 fois ce rayon moyen, les deux couches de renforts considérées sont dites découplées.

Une autre solution préférée est telle que la distance radiale entre la couche de travail, radialement intérieure à l'armature de frettage, et l'armature de carcasse, mesurée au centre de la portion de couplage des deux couches de travail, soit au moins égale à deux fois la distance radiale entre la couche de travail, radialement intérieure à l'armature de frettage, et l'armature de carcasse, mesurée dans le plan équatorial. En effet une des solutions possibles pour coupler les deux couches de travail est de maintenir la couche de travail la plus radialement intérieure sur un rayon de pose proche de son rayon à au plan équatorial, et de rabattre au rayon de couplage la couche de travail radialement extérieure à l'armature de frettage. Pour un pneumatique de type génie civil, les différences de rayon entre les couches de travail sont telles que rabattre la couche de travail radialement extérieure à l'armature de frettage génère des plis au sein de la dite couche et des défauts de moulage dans la zone de couplage. Pour limiter les différences de rayons des deux couches de travail entre leur rayon au plan équatorial et leur rayon dans la zone de couplage, il convient d'augmenter la distance de la couche de travail la plus radialement intérieure à la couche de carcasse la plus radialement extérieure, dans la zone de couplage, par rapport à cette même distance au plan équatorial.

Il est encore avantageux que le module d'élasticité à 10% d'allongement d'un premier matériau élastomérique, radialement intérieur et en contact avec la portion de couplage des couches de travail soit au moins égal au module d'élasticité à 10% d'allongement d'un deuxième matériau élastomérique, axialement extérieur et en contact avec le premier matériau élastomérique. La zone de couplage des couches de travail est une zone de plus grande rigidité que la zone de découplage lui étant axialement extérieure. Selon l'usage et les cisaillements dans le matériau élastomérique adjacent et radialement intérieur à la zone de couplage, dit premier matériau, il peut être préféré d'assurer un gradient de rigidité entre le matériau élastomérique axialement extérieur, dit deuxième matériau, et le matériau élastomérique enrobant la couche de travail adjacente et radialement extérieure, dit de calandrage, et dans ce cas, le module d'élasticité à 10% d'allongement du premier matériau élastomérique est supérieur ou égal au module d'élasticité à 10% d'allongement du deuxième matériau.

Il peut être également avantageux que le module d'élasticité à 10% d'allongement d'un premier matériau élastomérique, radialement intérieur et en contact avec la portion de couplage des couches de travail soit au moins égal au module d'élasticité à 10% d'allongement d'un matériau élastomérique enrobant les renforts métalliques de la couche de travail, radialement intérieure à l'armature de frettage. Ceci permet d'assurer la plus grande rigidité possible de la zone de couplage, tout en évitant une différence de rigidité entre le mélange de calandrage de la couche de travail adjacente et le premier matériau et donc les contraintes associées à toute discontinuité de rigidité. Dans ce cas, le module d'élasticité à 10% d'allongement du premier matériau est égal au module d'élasticité à 10% d'allongement du mélange de calandrage de la couche de travail.

Avantageusement, au niveau des extrémités axiales des couches de frettage, les surfaces moyennes des couches de travail font, avec la direction axiale, des angles au plus égaux à 45°. En effet, il est avantageux que les couches de travail ne soient pas déformées lors de la fabrication du pneumatique pour ne pas induire des contraintes de flexion dans leurs renforts, les surfaces moyennes des couches de travail qui font avec la direction axiale un angle proche de 0° dans la partie axialement intérieure à l'extrémité des renforts circonférentiels, rejoindront préférentiellement la zone de couplage avec un angle inférieur à 45°. Cette géométrie peut être obtenue par la pose d'une bande d'un matériau élastomérique à l'extrémité axiale des couches de renforts circonférentiels de section triangulaire.

Encore avantageusement le module d'élasticité à 10% d'allongement d'un matériau élastomérique, axialement compris entre chaque extrémité axiale de l'armature de frettage et la portion de couplage des couches de travail est égal au module d'élasticité à 10% d'allongement du matériau élastomérique enrobant les renforts métalliques des couches de travail afin d'éviter les discontinuités de contraintes liées aux changements de rigidité des matériaux élastomériques.

Il est particulièrement avantageux que la largeur d'une portion de la couche de travail, radialement intérieure à l'armature de frettage et axialement comprise entre l'extrémité axiale extérieure de la portion de couplage et l'extrémité axiale extérieure de ladite couche de travail, soit au plus égale à la moitié de largeur axiale de l'armature de frettage. En effet compte tenu de la présence de matériaux élastomériques de différentes rigidités impliquant la présence de contraintes à leurs frontières, tels qu'entre autres ceux la bande de roulement, il convient de limiter les déplacements des extrémités axiales des couches de travail. Pour cela il est intéressant de limiter la largeur de leurs parties découplées pour améliorer l'endurance au clivage du pneumatique.

Il est également avantageux que la largeur axiale de la portion de la couche de travail, radialement extérieure à l'armature de frettage et axialement comprise entre l'extrémité axiale extérieure de la portion de couplage et l'extrémité axiale extérieure de ladite couche de travail, soit au plus égale à la largeur de la portion de la couche de travail, radialement intérieure à l'armature de frettage et axialement comprise entre l'extrémité axiale extérieure de la portion de couplage et l'extrémité axiale extérieure de ladite couche de travail, afin de limiter les déplacements des extrémités axiales des couches de travail pour améliorer l'endurance au clivage du pneumatique.

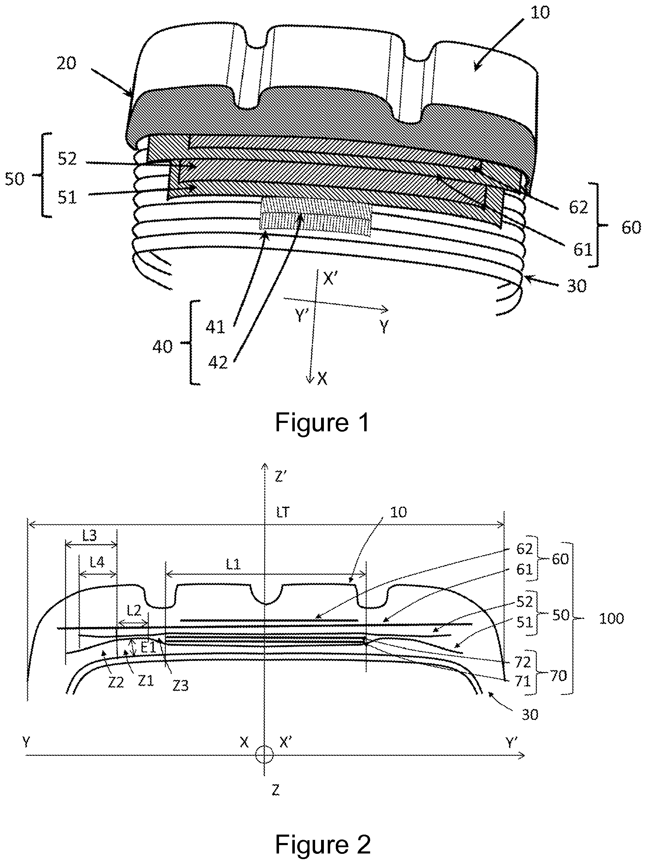

D'autres détails et caractéristiques avantageux de l'invention ressortiront ci-après de la description des exemples de réalisation de l'invention en référence aux figures 1 à 7.

Les figures ne sont pas représentées à l'échelle pour en simplifier la compréhension. Les figures ne représentent qu'une vue partielle d'un pneumatique qui se prolonge de manière sensiblement symétrique par rapport à l'axe XX' qui représente le plan médian circonférentiel, ou plan équatorial, d'un pneumatique. Par sensiblement symétrique, on entend symétrique aux variations dues à la fabrication, c'est-à-dire à une précision de l'ordre de ±3%. En l'occurrence l'architecture sommet de l'invention est compatible avec des bourrelets ou des flancs dissymétriques.
La figure1 présente une vue écorchée en perspective du sommet d'un pneumatique selon l'art antérieur présentant :
   - une bande de roulement 10,
   - des flancs 20,
   - une armature de carcasse 30, comprenant une couche de carcasse dont les renforts forment un angle proche de 90° avec la direction circonférentielle XX',
   - une armature de frettage 40, comprenant deux couches de frettage 41 et 42 dont les renforts forment respectivement des angles de 8° à 15°avec la direction circonférentielle XX',
   - une armature de travail 50, comprenant deux couches de travail 51 et 52, et radialement extérieure à l'armature de frettage 40,
   - une armature de protection 60, comprenant deux couches de protection 61 et 62.
La figure 2 représente une coupe méridienne du sommet d'un pneumatique selon l'invention présentant :
   - une bande de roulement 10,
   - une armature de carcasse 30,
   - une armature de sommet 100 comprenant une armature de travail 50 comprenant deux couches de travail 51 et 52, une armature de frettage 70 comprenant un enroulement de deux tours de renforts circonférentiels 71 et 72 ayant une largeur axiale L1 et une armature de protection 60 comprenant deux couches de protection 61 et 62,
   - une zone de couplage des couches de travail 51 et 52, ayant une largeur axiale L2,
   - une portion d'extrémité libre de la couche de travail radialement intérieure 51 ayant une largeur axiale L3,
   - une portion d'extrémité libre de la couche de travail radialement extérieure 52 ayant une largeur axiale L4,
   - un premier mélange élastomérique Z1, radialement intérieur à la zone de couplage des couches de travail 51 et 52 et ayant une épaisseur radiale maximale E1,
   - un deuxième mélange élastomérique Z2, radialement intérieur à la couche de travail radialement intérieure 51 et axialement extérieur à la zone de couplage des couches de travail 51 et 52,
   - un troisième mélange élastomérique Z3, radialement compris entre les couches de travail 51 et 52 et axialement compris entre l'armature de frettage 40 et la zone de couplage des couches de travail 51 et 52.

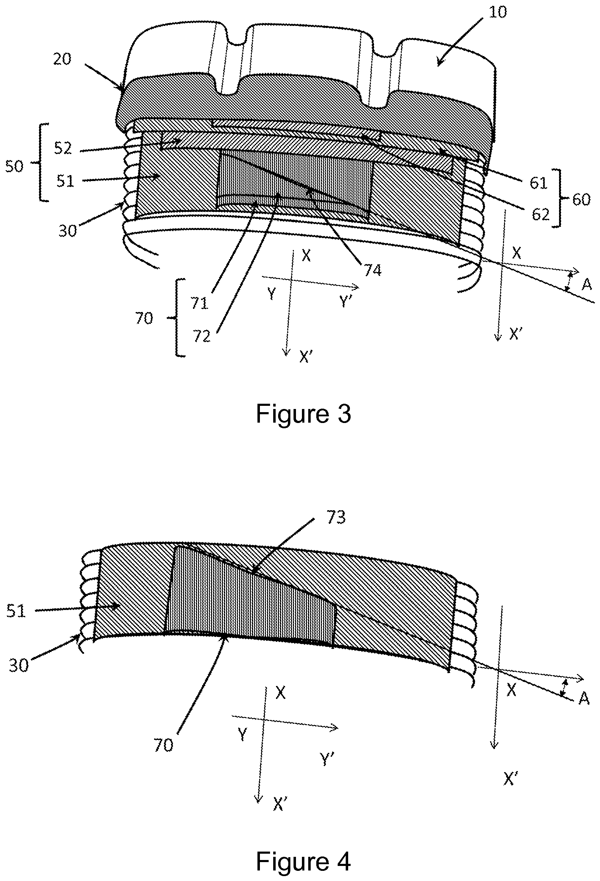

La figure 3 représente une vue écorchée en perspective du sommet d'un pneumatique selon l'invention. Elle diffère essentiellement de la figure 1, représentant l'état de la technique, par une armature de frettage 70 comprenant un enroulement de deux tours de renforts circonférentiels 71 et 72, dont l'extrémité circonférentielle 74 la plus radialement extérieure fait avec la direction axiale un angle (A).
La figure 4 représente une vue écorchée en perspective et partielle du sommet d'un pneumatique selon l'invention présentant notamment :
   - l'armature de carcasse 30,
   - la couche de travail la plus radialement intérieure 51,
   - l'extrémité circonférentielle 73 de l'armature de frettage 70 la plus radialement intérieure faisant avec la direction axiale un angle (A).

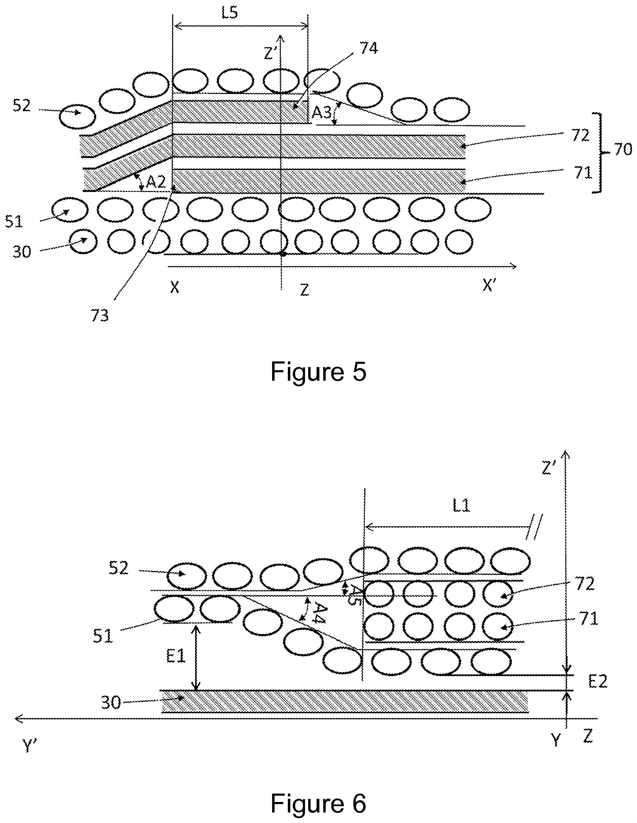

La figure 5 représente une coupe circonférentielle, dans le plan équatorial, de la portion de recouvrement circonférentiel de l'armature de frettage 70. En zone courante, l'armature de frettage 70 comprend une superposition radiale de deux couches 71 et 72. Dans la zone de recouvrement ayant une longueur circonférentielle L5, l'armature de frettage comprend une superposition radiale de trois couches. Au niveau de sa première extrémité circonférentielle 73 radialement intérieure, l'armature de frettage 70 fait un angle A2 avec la direction circonférentielle XX'. Au niveau de la deuxième extrémité circonférentielle 74, radialement extérieure, de l'armature de frettage 70, la couche de travail 52 radialement extérieure fait un angle A3 avec la direction circonférentielle XX'.
La figure 6 représente une coupe du sommet , dans un plan méridien, au niveau des extrémités axiales des couches de frettage 71 et 72, où les couches de travail radialement intérieure 51 et radialement extérieure 52 font respectivement des angles A4 et A5 avec la direction axiale YY'. Elle représente en particulier l'épaisseur radiale E1 du premier mélange élastomérique Z1, radialement compris entre l'armature de carcasse 30 et la couche de travail la plus radialement intérieure 51 et radialement à l'intérieur de la zone de couplage des couches de travail 51 et 52, et l'épaisseur radiale E2 de mélange élastomérique radialement compris entre la couche de travail radialement intérieure et l'armature de carcasse 30, mesurée dans le plan équatorial.

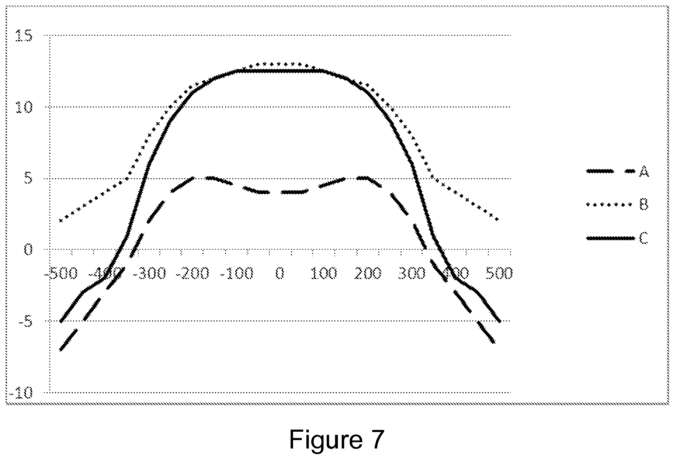

La figure 7 représente les déplacements en mm des points de la surface de roulement, situés dans un plan méridien, lors du gonflage du pneumatique à la pression préconisée par le fabricant dans les trois cas suivants:
   - un pneumatique A de l'art antérieur comprenant deux couches étroites de frettage présentant l'avantage de limiter la montée aux épaules et ainsi le risque de clivage des couches de travail, mais présentant l'inconvénient de rigidifier le centre, le rendant ainsi sensible aux chocs,
   - un pneumatique B de l'art antérieur sans armature de frettage, donc avec un sommet souple au centre et une bonne résistance aux chocs, mais souple également aux épaules, avec comme conséquence une température d'usage au sommet élevée pouvant entraîner un clivage des couches de travail,
   - un pneumatique C selon l'invention comprenant radialement de l'extérieur vers l'intérieur :
   - une armature de protection formée de couches de protection dont les renforts métalliques élastiques ont un diamètre égal à 3.8 mm et une force à rupture égale à 950 daN,
   - une armature de travail formée de couches de travail dont les renforts métalliques inélastiques croisés d'une couche de travail à la suivante forment, avec la direction circonférentielle, des angles au moins égaux à 33° et ont une force à rupture égale à 2500 daN,
   - une armature de frettage formée de deux couches de frettage, radialement positionnées entre les couches de travail, dont les renforts métalliques circonférentiels ont une force à rupture a égale à 950 daN.

L'invention a été réalisée sur un pneumatique pour véhicule lourd de génie civil de dimension 53/80R63, de largeur axiale maximale égale à 1345 mm. Le pneumatique de référence, selon l'état de la technique, est composé d'une couche de carcasse avec renforts métalliques, de deux couches étroites de frettage de largeur égale à 550 mm, ayant des renforts faisant, avec la direction circonférentielle, un angle égal à 8°, et croisés d'une couche à la suivante, de deux couches de travail de largeurs respectives égales à 900 mm et 1000 mm et ayant des renforts formant, avec la direction circonférentielle, des angles respectifs égaux à 33° et 19°, ayant une force à rupture égale à 1960 daN et deux couches de protection ayant des renforts de diamètre 2 mm, une force à rupture de 255 daN et faisant, avec la direction circonférentielle, un angle égal à 24°, et croisés d'une couche à la suivante.

Le pneumatique selon l'invention diffère du pneumatique de l'état de la technique par l'armature de travail ayant deux couches de travail dont les renforts respectifs font, avec la direction circonférentielle, un angle égal à 33°, et dont la force à rupture est égale à 2530 daN et par l'armature de frettage et l'armature de protection. Entre les couches de travail est disposée l'armature de frettage constituée par l'enroulement circonférentiel de deux tours d'une nappe ayant une largeur axiale égale à 520 mm et comprenant des renforts circonférentiels métalliques élastiques ayant une résistance à la rupture égale à 950 daN et un module élastique égal à 90 GPa, ces caractéristiques mécaniques étant mesurées sur des renforts extraits du pneumatique. Les couches de protection sont constitués de renforts de même nature que les couches de frettage et qui font avec la direction circonférentielle, un angle égal à 33°. Ces renforts ont un diamètre de 3.8 mm.

Les deux couches de travail sont couplées sur une largeur axiale de 30 mm. La distance radiale entre l'armature de carcasse et la couche de travail la plus radialement intérieure est égale à 4,6 mm dans le plan équatorial, et est égale à 13 mm sous la zone de couplage des couches de travail. Les matériaux élastomériques dans les différentes zones autour de la zone de couplage sont identiques au matériau élastomérique enrobant les renforts des couches de travail. La longueur de la couche de travail radialement intérieure à l'armature de frettage, mesurée de l'extrémité axiale extérieure de la zone de couplage à l'extrémité axiale extérieure de ladite couche de travail, est égale à 115 mm et la longueur de la couche de travail radialement extérieure à l'armature de frettage, mesurée de l'extrémité axiale extérieure de la zone de couplage à l'extrémité axiale extérieure de ladite couche de travail, est égale à 70 mm.

Les deux architectures des deux pneumatiques ont été modélisées par éléments finis pour évaluer la valeur des déformations en cisaillement entre l'extrémité axiale de la couche de travail la plus radialement extérieure et la couche de travail la plus radialement intérieure sur un roulage. Le calcul est effectué en simulant une charge de 90t, une force de dérive de 18t pour une pression de 7 bars. Sur le critère choisi, la solution permet de diminuer l'amplitude du cycle de déformation au tour de roue de près de 30% comparativement à l'état de la technique. Or cette valeur est directement corrélée avec la performance clivage du sommet. Par ailleurs, les renforts des couches de travail dans l'invention ne subissent, pour ces mêmes calculs, aucun effort de compression contrairement au pneumatique suivant l'état de la technique, ce qui est directement lié avec la performance en endurance du sommet. L'évaluation de la température interne du pneumatique donne pour l'invention une température dans le sommet abaissée d'environ 2°C par rapport au pneumatique selon l'état de l'art, ce qui est un critère connu pour améliorer la tenue en clivage des pneumatiques.

Les performances en endurance au clivage du sommet sont mesurées sur des tests sur véhicule dumper avec 90t de charge par pneumatique, gonflé à froid à 6 bars et roulant 640 heures à 17km/h. Suite à cet usage, les pneumatiques sont coupés en 6 secteurs, la bande de roulement est déchapée afin d'extraire les couches de travail et de détecter les fissures éventuelles présentes entre ces deux couches. La performance d'endurance au clivage du sommet est estimée au prorata des largeurs des fissures de clivage. Le pneumatique selon l'invention révèle une taille des dommages de clivage au moins 20% plus faible que pour le pneumatique selon l'état de la technique.

Pour des pneumatiques de cette dimension, la résistance aux chocs sommet des différentes versions de pneumatiques est testée directement en usage chez les clients. Ces expérimentations in situ ont démontré que les pneumatiques sans armature de frettage, plus souples au sommet, ont une meilleure résistance aux chocs que ceux disposant de couches étroites de frettage suivant l'état de l'art, tandis que ces derniers sont meilleurs en endurance au clivage du sommet. Le pneumatique selon l'invention présente à la fois une résistance aux chocs au moins égale à celle d'un pneumatique sans armature de frettage et un gain en clivage du sommet de 30% par rapport à un pneumatique comprenant une armature de frettage selon l'état de l'art.

## Revendications

1. Pneumatique pour véhicule lourd de type génie civil comprenant :
- une bande de roulement (10) destinée à entrer en contact avec un sol,
- une armature de carcasse radiale (30) radialement intérieure à la bande de roulement (10) et comprenant au moins une couche de carcasse,
- une armature de sommet (100), radialement intérieure à la bande de roulement (10) et radialement extérieure à l'armature de carcasse radiale (30), et comprenant une armature de travail (50), une armature de frettage (70) et une armature de protection (60),
- l'armature de travail (50) comprenant au moins deux couches de travail (51, 52), chacune comprenant des renforts métalliques inélastiques croisés d'une couche de travail à la suivante et faisant, avec la direction circonférentielle des angles au moins égaux à 30° et au plus égaux à 35°,
- l'armature de frettage (70) étant formée par un enroulement circonférentiel d'une nappe comprenant des renforts métalliques élastiques circonférentiels faisant, avec la direction circonférentielle des angles au plus égaux à 2.5°, ledit enroulement circonférentiel de la nappe s'étendant depuis une première extrémité circonférentielle (73) jusqu'à une deuxième extrémité circonférentielle (74) radialement extérieure à la première extrémité circonférentielle, de façon à former un empilement radial d'au moins deux couches de frettage (71, 72),
- l'armature de protection (60) comprenant au moins deux couches de protection (61, 62) composées de renforts métalliques croisés d'une couche de protection à la suivante et faisant, avec la direction circonférentielle des angles au moins égaux à 20° et au plus égaux à 40°,
**caractérisé en ce que** les renforts métalliques des couches de protection sont élastiques, ont un diamètre au moins égal à 3 mm, et une force à rupture au moins égale à 800 daN, **en ce que** les renforts métalliques des couches de travail (51, 52) ont une force à rupture au moins égale à 2500 daN, **en ce que** l'armature de frettage (70) est radialement positionnée entre les couches de travail (51,52) **et en ce que** les renforts métalliques circonférentiels de l'armature de frettage (70) ont une force à rupture au moins égale à 800 daN.

2. Pneumatique selon la revendication 1, **dans lequel** les renforts métalliques circonférentiels de l'armature de frettage (70) et des couches de protection (61, 62) sont de même nature.

3. Pneumatique selon l'une des revendications 1 ou 2, **dans lequel** les renforts métalliques circonférentiels de l'armature de frettage (70) ou des couches de protection ont un module d'élasticité à 10% d'allongement au moins égal à 70 GPa et au plus égal à 130 GPa.

4. Pneumatique selon l'une quelconque des revendications 1 à 3, **dans lequel** les renforts métalliques des couches de protection font avec la direction circonférentielle des angles dont la valeur absolue est sensiblement égale à l'angle des renforts métalliques des couches de travail avec la direction circonférentielle.

5. Pneumatique selon l'une quelconque des revendications 1 à 4, **dans lequel** la largeur axiale (L1) de l'armature de frettage (70) est inférieure à la moitié de la largeur axiale (LT) du pneumatique.

6. Pneumatique selon l'une quelconque des revendications 1 à 5, **dans lequel** les deux couches de travail (51, 52) sont couplées, selon la direction axiale, sur une portion de couplage ayant une largeur axiale (L2) au moins égale à 1,5% de la largeur axiale du pneumatique (LT).

7. Pneumatique selon l'une quelconque des revendications 1 à 6, **dans lequel** les deux couches de travail (51, 52) sont couplées, selon la direction axiale, sur une portion de couplage ayant une largeur axiale (L2) au plus égale à 5% la largeur axiale du pneumatique (LT).

8. Pneumatique selon l'une quelconque des revendications 6 ou 7, **dans lequel** la distance radiale (E1) entre la couche de travail (51), radialement intérieure à l'armature de frettage (70), et l'armature de carcasse (30), mesurée au centre de la portion de couplage des deux couches de travail (51,52), est au moins égale à deux fois la distance radiale (E2) entre la couche de travail (51), radialement intérieure à l'armature de frettage (70), et l'armature de carcasse (30), mesurée dans le plan équatorial.

9. Pneumatique selon l'une quelconque des revendications 6 à 8, **dans lequel** la largeur (L3) d'une portion de la couche de travail (51), radialement intérieure à l'armature de frettage (70) et axialement comprise entre l'extrémité axiale extérieure de la portion de couplage et l'extrémité axiale extérieure de ladite couche de travail (51), est au plus égale à la moitié de largeur axiale (L1) de l'armature de frettage (70).

10. Pneumatique selon l'une quelconque des revendications 6 à 9, **dans lequel** la largeur axiale (L4) de la portion de la couche de travail (52), radialement extérieure à l'armature de frettage (70) et axialement comprise entre l'extrémité axiale extérieure de la portion de couplage et l'extrémité axiale extérieure de ladite couche de travail (52), est au plus égale à la largeur (L3) de la portion de la couche de travail (51), radialement intérieure à l'armature de frettage (70) et axialement comprise entre l'extrémité axiale extérieure de la portion de couplage et l'extrémité axiale extérieure de ladite couche de travail (51).

## Patentansprüche

1. Luftreifen für Schwerlastwagen von der Art Baufahrzeug, der aufweist:
- einen Laufstreifen (10), der dazu bestimmt ist, mit einem Boden in Kontakt zu kommen,
- eine radiale Karkassenbewehrung (30) radial innen bezüglich des Laufstreifens (10) und mindestens eine Karkassenschicht enthaltend,
- eine Scheitelbewehrung (100), radial innen bezüglich des Laufstreifens (10) und radial außen bezüglich der radialen Karkassenbewehrung (30), und eine Arbeitsbewehrung (50), eine Bandagierungsbewehrung (70) und eine Schutzbewehrung (60) enthaltend,
- wobei die Arbeitsbewehrung (50) mindestens zwei Arbeitsschichten (51, 52) enthält, die je unelastische metallische Verstärkungen enthalten, die sich von einer Arbeitsschicht zur nächsten kreuzen und mit der Umfangsrichtung Winkel mindestens gleich 30° und höchstens gleich 35° bilden,
- wobei die Bandagierungsbewehrung (70) von einer Umfangswicklung einer Lage gebildet wird, die elastische metallische Umfangsverstärkungen enthält, die mit der Umfangsrichtung Winkel höchstens gleich 2,5° bilden, wobei die Umfangswicklung der Lage sich von einem ersten Umfangsende (73) bis zu einem zweiten Umfangsende (74) radial außen bezüglich des ersten Umfangsendes erstreckt, um eine radiale Stapelung von mindestens zwei Bandagierungsschichten (71, 72) zu bilden,
- wobei die Schutzbewehrung (60) mindestens zwei Schutzschichten (61, 62) enthält, die aus metallischen Verstärkungen zusammengesetzt sind, die sich von einer Schutzschicht zur nächsten kreuzen und mit der Umfangsrichtung Winkel mindestens gleich 20° und höchstens gleich 40° bilden,
**dadurch gekennzeichnet, dass** die metallischen Verstärkungen der Schutzschichten elastisch sind, einen Durchmesser mindestens gleich 3 mm und eine Reißkraft mindestens gleich 800 daN haben, dass die metallischen Verstärkungen der Arbeitsschichten (51, 52) eine Reißkraft mindestens gleich 2500 daN haben, dass die Bandagierungsbewehrung (70) radial zwischen den Arbeitsschichten (51, 52) positioniert ist, und dass die metallischen Umfangsverstärkungen der Bandagierungsbewehrung (70) eine Reißkraft mindestens gleich 800 daN haben.

2. Luftreifen nach Anspruch 1, wobei die metallischen Umfangsverstärkungen der Bandagierungsbewehrung (70) und der Schutzschichten (61, 62) von gleicher Beschaffenheit sind.

3. Luftreifen nach einem der Ansprüche 1 oder 2, wobei die metallischen Umfangsverstärkungen der Bandagierungsbewehrung (70) oder der Schutzschichten einen Elastizitätsmodul bei 10% Dehnung mindestens gleich 70 GPa und höchstens gleich 130 GPa haben.

4. Luftreifen nach einem der Ansprüche 1 bis 3, wobei die metallischen Verstärkungen der Schutzschichten mit der Umfangsrichtung Winkel bilden, deren Absolutwert im Wesentlichen gleich dem Winkel der metallischen Verstärkungen der Arbeitsschichten mit der Umfangsrichtung ist.

5. Luftreifen nach einem der Ansprüche 1 bis 4, wobei die axiale Breite (L1) der Bandagierungsbewehrung (70) geringer als die Hälfte der axialen Breite (LT) des Luftreifens ist.

6. Luftreifen nach einem der Ansprüche 1 bis 5, wobei die zwei Arbeitsschichten (51, 52) gemäß der axialen Richtung über einen Kopplungsabschnitt gekoppelt sind, der eine axiale Breite (L2) mindestens gleich 1,5% der axialen Breite des Luftreifens (LT) hat.

7. Luftreifen nach einem der Ansprüche 1 bis 6, wobei die zwei Arbeitsschichten (51, 52) gemäß der axialen Richtung über einen Kopplungsabschnitt gekoppelt sind, der eine axiale Breite (L2) höchstens gleich 5% der axialen Breite des Luftreifens (LT) hat.

8. Luftreifen nach einem der Ansprüche 6 oder 7, wobei der radiale Abstand (E1) zwischen der Arbeitsschicht (51), radial innen bezüglich der Bandagierungsbewehrung (70), und der Karkassenbewehrung (30), gemessen in der Mitte des Kopplungsabschnitts der zwei Arbeitsschichten (51, 52), mindestens gleich dem doppelten radialen Abstand (E2) zwischen der Arbeitsschicht (51), radial innen bezüglich der Bandagierungsbewehrung (70), und der Karkassenbewehrung (30), gemessen in der Äquatorialebene, ist.

9. Luftreifen nach einem der Ansprüche 6 bis 8, wobei die Breite (L3) eines Abschnitts der Arbeitsschicht (51), radial innen bezüglich der Bandagierungsbewehrung (70) und axial zwischen dem äußeren axialen Ende des Kopplungsabschnitts und dem äußeren axialen Ende der Arbeitsschicht (51), höchstens gleich der Hälfte der axialen Breite (L1) der Bandagierungsbewehrung (70) ist.

10. Luftreifen nach einem der Ansprüche 6 bis 9, wobei die axiale Breite (L4) des Abschnitts der Arbeitsschicht (52), radial außen bezüglich der Bandagierungsbewehrung (70) und axial zwischen dem äußeren axialen Ende des Kopplungsabschnitts und dem äußeren axialen Ende der Arbeitsschicht (52), höchstens gleich der Breite (L3) des Abschnitts der Arbeitsschicht (51), radial innen bezüglich der Bandagierungsbewehrung (70) und axial zwischen dem äußeren axialen Ende des Kopplungsabschnitts und dem äußeren axialen Ende der Arbeitsschicht (51), ist.

## Claims

1. Tyre for a heavy vehicle of construction plant type, comprising:
- a tread (10) that is intended to come into contact with the ground,
- a radial carcass reinforcement (30) radially on the inside of the tread (10) and comprising at least one carcass layer,
- a crown reinforcement (100), radially on the inside of the tread (10) and radially on the outside of the radial carcass reinforcement (30), and comprising a working reinforcement (50), a hoop reinforcement (70) and a protective reinforcement (60),
- the working reinforcement (50) comprising at least two working layers (51, 52), each comprising inelastic metallic reinforcers that are crossed from one working layer to the next and make angles at least equal to 30° and at most equal to 35° with the circumferential direction,
- the hoop reinforcement (70) being formed by a circumferential winding of a ply comprising circumferential elastic metallic reinforcers that make angles at most equal to 2.5° with the circumferential direction, said circumferential winding of the ply extending from a first circumferential end (73) to a second circumferential end (74) radially on the outside of the first circumferential end, so as to form a radial stack of at least two hooping layers (71, 72),
- the protective reinforcement (60) comprising at least two protective layers (61, 62) made up of metallic reinforcers that are crossed from one protective layer to the next and make angles at least equal to 20° and at most equal to 40° with the circumferential direction,
**characterized in that** the metallic reinforcers of the protective layers are elastic, have a diameter at least equal to 3 mm and a force at break at least equal to 800 daN, **in that** the metallic reinforcers of the working layers (51, 52) have a force at break at least equal to 2500 daN, **in that** the hoop reinforcement (70) is radially positioned between the working layers (51, 52), **and in that** the circumferential metallic reinforcers of the hoop reinforcement (70) have a force at break at least equal to 800 daN.

2. Tyre according to Claim 1, **wherein** the circumferential metallic reinforcers of the hoop reinforcement (70) and of the protective layers (61, 62) are of the same kind.

3. Tyre according to either of Claims 1 and 2, **wherein** the circumferential metallic reinforcers of the hoop reinforcement (70) or of the protective layers have a modulus of elasticity at 10% elongation at least equal to 70 GPa and at most equal to 130 GPa.

4. Tyre according to any one of Claims 1 to 3, **wherein** the metallic reinforcers of the protective layers make angles with the circumferential direction that have an absolute value substantially equal to the angle of the metallic reinforcers of the working layers with the circumferential direction.

5. Tyre according to any one of Claims 1 to 4, **wherein** the axial width (L1) of the hoop reinforcement (70) is less than half the axial width (LT) of the tyre.

6. Tyre according to any one of Claims 1 to 5, **wherein** the two working layers (51, 52) are coupled, in the axial direction, over a coupling portion having an axial width (L2) at least equal to 1.5% of the axial width (LT) of the tyre.

7. Tyre according to any one of Claims 1 to 6, **wherein** the two working layers (51, 52) are coupled, in the axial direction, over a coupling portion having an axial width (L2) at most equal to 5% of the axial width (LT) of the tyre.

8. Tyre according to either one of Claims 6 and 7, **wherein** the radial distance (E1) between the working layer (51), radially on the inside of the hoop reinforcement (70), and the carcass reinforcement (30), measured at the centre of the coupling portion of the two working layers (51, 52), is at least equal to twice the radial distance (E2) between the working layer (51), radially on the inside of the hoop reinforcement (70), and the carcass reinforcement (30), measured in the equatorial plane.

9. Tyre according to any one of Claims 6 to 8, **wherein** the width (L3) of a portion of the working layer (51), radially on the inside of the hoop reinforcement (70) and axially contained between the outer axial end of the coupling portion and the outer axial end of said working layer (51), is at most equal to half the axial width (L1) of the hoop reinforcement (70).

10. Tyre according to any one of Claims 6 to 9, **wherein** the axial width (L4) of the portion of the working layer (52), radially on the outside of the hoop reinforcement (70) and axially contained between the outer axial end of the coupling portion and the outer axial end of said working layer (52), is at most equal to the width (L3) of the portion of the working layer (51), radially on the inside of the hoop reinforcement (70) and axially contained between the outer axial end of the coupling portion and the outer axial end of said working layer (51).
